## Europäisches Patentamt

## European Patent Office

## Office européen des brevets

(19)

(11) Veröffentlichungsnummer: **0 153 619**
**B1**

(12) **EUROPÄISCHE PATENTSCHRIFT**

(45) Veröffentlichungstag der Patentschrift:
29.06.88

(21) Anmeldenummer: 85101199.9

(22) Anmeldetag: 06.02.85

(51) Int. Cl.⁴: **C 03 B 37/012**, C 03 B 19/06,
C 03 B 19/09

(54) Verfahren zur Herstellung eines länglichen Glaskörpers, insbesondere einer Vorform für Lichtwellenleiter.

(30) Priorität: 23.02.84 DE 3406475
17.08.84 DE 3430265

(43) Veröffentlichungstag der Anmeldung:
04.09.85 Patentblatt 85/36

(45) Bekanntmachung des Hinweises auf die Patenterteilung:
29.06.88 Patentblatt 88/26

(84) Benannte Vertragsstaaten:
DE FR GB

(56) Entgegenhaltungen:
DE-A-3 217 965
US-A-2 960 723

(73) Patentinhaber: ALCATEL N.V., Strawinskylaan 537
(World Trade Center), NL- 1077 XX Amsterdam
(NL)

(84) Benannte Vertragsstaaten: FR GB

(73) Patentinhaber: Standard Elektrik Lorenz
Aktiengesellschaft, Lorenzstrasse 10, D-7000
Stuttgart 40 (DE)

(84) Benannte Vertragsstaaten: DE

(72) Erfinder: Dorn, Raimund, Dr., Peter- von- Koblenz-
Strasse 31, D-7141 Schwieberdingen (DE)
Erfinder: Baumgärtner, Armin, Dr.,
Heutingsheimer Strasse 26, D-7140 Ludwigsburg
(DE)
Erfinder: Gutu- Nelle, Anca, Münchinger Strasse
11 a, D-7000 Stuttgart 40 (DE)

(74) Vertreter: Kugler, Hermann, Dipl.- Phys., Standard
Elektrik Lorenz AG Patent- und Lizenzwesen
Postfach 30 09 29, D-7000 Stuttgart 30 (DE)

EP 0 153 619 B1

## Beschreibung

Verfahren zur Herstellung eines länglichen Glaskörpers, insbesondere einer Vorform für Lichtwellenleiter

Die Erfindung betrifft ein Verfahren zur Herstellung eines länglichen Glaskörpers, insbesondere einer Vorform für Lichtwellenleiter auf der Basis von SiO$_2$ bei dem aus pulverförmigem Glasausgangsmaterial durch Einfüllen in eine Preßform und Pressen ein poröser Körper geformt und dieser zum Glaskörper gesintert wird, und eine Vorrichtung zum Einfüllen von pulverförmigem Glasausgangsmaterial in eine Preßform, mit einem Vorratsbehälter und einer Preßform, womit dieses Verfahren durchgeführt werden kann.

Ein solches Verfahren und eine solche Vorrichtung sind bekannt aus er DE-A1-3 217 965. Bei diesem Verfahren läßt man das pulverförmige Glasausgangsmaterial lose in Preßformen hineinrieseln und preßt danach das lose eingefüllte Material zum porösen Körper. Diese Art von Einfüllvorgang, der auch als Schüttung bezeichnet werden kann, ergibt insbesondere bei Pulvern mit sehr feiner Verteilung nur eine geringe Dichte, so daß ein formtreues Pressen erschwert wird. Außerdem wird die Preßform dabei nur inhomogen befüllt, da durch Brückenbildungen im Pulver Hohlräume entstehen.

Aus der DE-B-3 240 355 ist ein ähnliches Verfahren bekannt, bei dem das Glasausgangsmaterial in Form von Körnern lose zu einem Schüttkörper aufgehäuft wird, der Schüttkörper während seines Aufbaus an seinem Umfang formstabilisiert und anschließend durch Pressen zu einem porösen Körper geformt wird. Auch dieses Verfahren hat den Nachteil, daß durch die Schüttung nur eine geringe Dichte und Hohlräume im Schüttkörper entstehen, die ein formtreues Pressen erschweren.

Es ist daher die Aufgabe der Erfindung, ein Verfahren anzugeben, das die Nachteile der bekannten Verfahren vermeidet.

Die Aufgabe wird wie im Patentanspruch 1 angegeben gelöst. Vorteilhafte Ausgestaltungen und Weiterbildungen des Verfahrens sind den Unteransprüchen zu entnehmen, insbesondere betrifft der Anspruchs 17 eine Vorrichtung zur Durchführung des erfindungsgemäßen Verfahrens.

Die Erfindung wird nun anhand der Zeichnungen beispielsweise näher erläutert. Es zeigen:

Fig. 1 eine Vorrichtung zum Einfüllen des pulverförmigen Glasausgangsmaterials in eine Preßform gemäß dem erfindungsgemäßen Verfahren,

Fig. 2 eine Anordnung zur Regelung des Einfülldrucks für eine Vorrichtung nach der in Fig. 1 gezeigten Art,

Fig. 3a einen Teil einer Fördervorrichtung zum Formen eines rohrförmigen porösen Körpers und

Fig. 3b eine Preßform passend zur Fördervorrichtung nach Fig. 3a.

Die Erfindung wird nachstehend im Hinblick auf den Anwendungsfall der Herstellung einer Vorform für Lichtwellenleiter beschrieben, wobei das Ausgangsmaterial SiO$_2$ als Basismaterial hat, das zur Veränderung des Brechungsindex im allgemeinen eines oder mehrere Dotierungsmittel wie beispielsweise GeO$_2$, P$_2$O$_5$, F, B$_2$O$_3$ enthält. Es ist darauf hinzuweisen, daß sich das erfindungsgemäße Verfahren auch zur Herstellung von anderen Gegenständen als Lichtwellenleitern verwenden läßt, sofern nur das dafür in Frage kommende Ausgangsmaterial in Pulverform hergestellt, zu einem porösen Körper gepreßt und dieser zum Glaskörper gesintert werden kann.

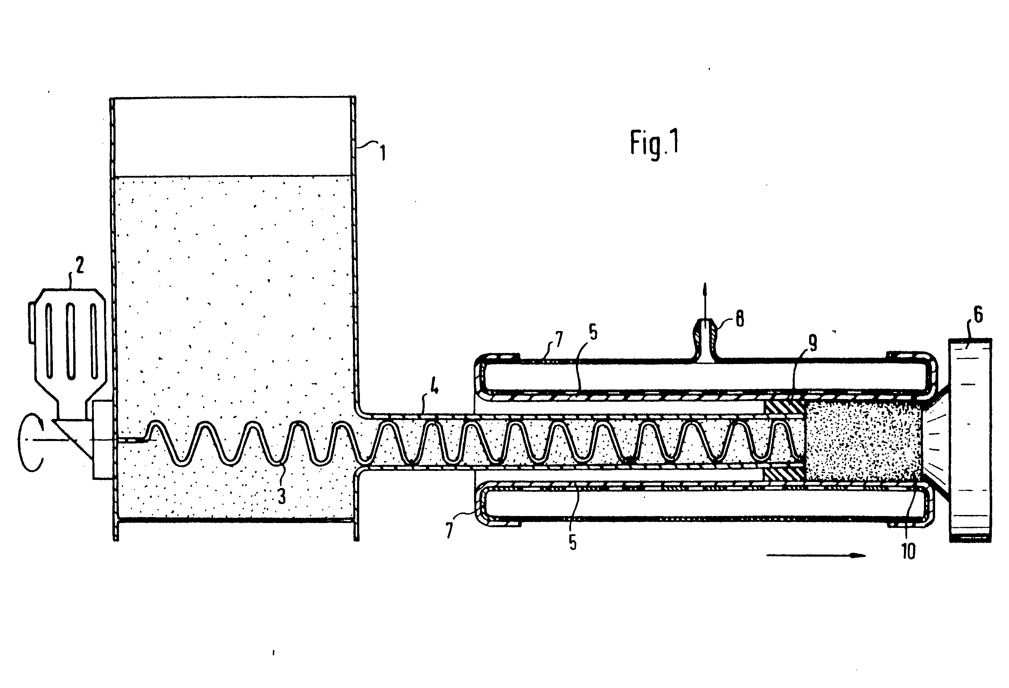

Die in Fig. 1 gezeigte Vorrichtung hat einen Vorratsbehälter 1, in dem sich das pulverförmige Glasausgangsmaterial befindet und der gegen die äußere Atmosphäre abgedichtet ist. Für den genannten Anwendungsfall handelt es sich um synthetisch hergestelltes pulverförmiges Glasausgangsmaterial auf der Basis von SiO$_2$, eventuell mit Dotierungszusätzen. Zur Herstellung des Pulvers sind nicht nur die aus der eingangs genannten Druckschrift bekannten Verfahren der chemischen Dampfphasenreaktion und der Flammhydrolyse (auch pyrogenes Verfahren genannt) geeignet, sondern auch sogenannte "naßchemische" Verfahren, bei denen das Pulvermaterial durch Ausfällen aus einer chemischen Flüssigphasenreaktion und anschließendes Trocknen des ausgefällten Materials gewonnen wird.

Abhängig vom Feuchtigkeitszustand und vom Reinheitszustand des synthetisch hergestellten Pulvermaterials, kann es notwendig oder günstig sein, vor dem Einfüllen in den Vorratsbehälter eine Trocknung durch Tempern in einem Vakuum und/oder eine Reinigung durch eine Wärmebehandlung in chlorhaltiger Atmosphäre durchzuführen. Die Trocknungs- und Renigungswirkung ist infolge der großen Oberfläche des Pulvermaterials intensiver als die entsprechende Behandlung nach dem Formen der porösen Körper. Diese Vorbehandlung erlaubt also die Verwendung von weniger reinen und weniger trockenen Materialien, die sich kostengünstiger herstellen lassen.

Um die Schüttdichte des Pulvermaterials zu erhöhen und damit ein formtreues Pressen zu erleichtern, kann es notwendig oder günstig sein, das Pulvermaterial zu agglomerieren, wofür thermische oder mechanische oder Flüssigkeitsverfahren zur Verfügung stehen.

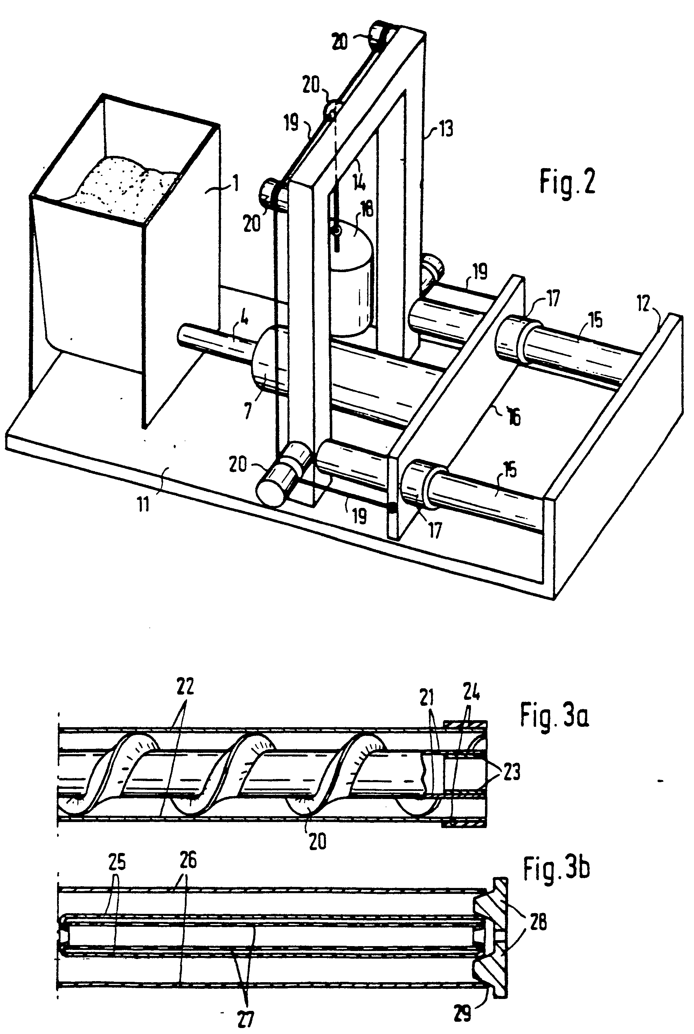

Im Vorratsbehälter 1 befindet sich in Bodennähe eine von einem außenliegenden Motor 2 angetriebene Förderschnecke 3, mit der sich das im Vorratsbehälter befindliche Pulvermaterial durch ein langgestrecktes Förderrohr hindurch aus dem Vorratsbehälter 1 hinausfördern läßt. Das Förderrohr 4 ragt in eine Preßform hinein, die mit dem Pulvermaterlal gefüllt werden soll. Die Preßform ist im gezeigten Beispiel ein flexibler Schlauch 5, der an dem in Förderrichtung gelegenen Ende durch einen Deckel 6 verschlossen ist. Der Einfülldruck wird dadurch erzeugt, daß die Förderschnecke das Material mit der durch ihren Motor vorgegebenen Förderkraft in Richtung zum Deckel 6 drückt und daß auf den Deckel 6 eine Gegenkraft gegen die Förderrichtung wirkt. Zur Begrenzung des Einfülldrucks ist eine Vorrichtung vorgesehen, die anhand von Fig. 2 erläutert wird und die für eine einstellbare Gegenkraft sorgt. Der als Preßform verwendete flexible Schlauch würde unter der Wirkung des Einfülldrucks mit großer Wahrscheinlichkeit unregelmäßig ausgedehnt werden, und es würden dadurch erhebliche Abweichungen von der gewünschten zylindrischen Form des eingefüllten Materials entstehen. Aus diesem Grunde wird der Schlauch 5 während des Einfüllvorgangs durch einen ihn umgebenden starren Formkörper formstabilisiert. Hierzu würde zunächst ein Rohr genügen, auf das die Enden des Schlauchs aufgestülpt werden und an dessen Innenwand der Schlauch beim Einfüllvorgang anliegt. Da aber beim anschließenden Pressen des in den Schlauch eingefüllten Materials ein erheblicher Volumenschrumpf auftritt, entstehen bei diesem Pressen Falten im Schlauch 5, die sich in der Oberfläche des entstehenden porösen Körpers abbilden und zu unerwünschten Welligkeiten in dessen Oberfläche führen, wenn keine besonderen Gegenmaßnahmen vorgesehen sind. Gemäß einer vorteilhaften Ausgestaltung des erfindungsgemäßen Verfahrens ist als Gegenmaßnahme vorgesehen, daß der Schlauch 5 während des Einfüllens vorgedehnt wird, damit er beim anschließenden Pressen keine Falten bildet. Dies geschieht dadurch, daß als formstabilisierender starrer Körper ein doppelwandiges Rohr 7 verwendet wird, dessen innere Wand wie in der Zeichnung sichtbar perforiert ist und dessen Zwischenraum zwischen den beiden Wänden einem erhöhten oder erniedrigten Druck ausgesetzt werden kann. Zur Druckveränderung ist in der äußeren Wand des Rohres 7 eine Öffnung mit einem Stutzen 8 vorgesehen, auf den ein Schluch einer Vakuumpumpe aufgestülpt werden kann. Die Vakuumpumpe, z. B. eine Wasserstrahlpumpe, erzeugt im Zwichenraum zwischen den Wänden einen Unterdruck, der durch die perforierte innere Wand hindurch auf den Schlauch 5 wirkt, diesen in Richtung zur inneren Wand zieht und soweit ausdehnt, bis er an dieser inneren Wand glatt anliegt. Der so ausgebildete starre Formkörper erlaubt somit gleichzeitig eine Vordehnung des Schlauchs 5 und eine Formstabilisierung des Schlauchs 5 beim Einfüllen.

Zum Abdichten des zwischen dem Förderrohr 4 und dem vorgedehnten Schlauch 5 bestehenden Zwischenraums ist das Auslaßende des Förderrohrs 6 von einem Dichtring 9 umgeben, der am Förderrohr befestigt ist und für eine konstante Reibungskraft zwischen dem Förderrohr 4 und dem vorgedehnten Schlauch 5 sorgt, die nicht davon abhängt, wie weit das Förderrohr 4 gerade in die Preßform hineinragt.

Das in Förderrichtung gelegene Ende der Preßform wird durch der bereits erwähnten Deckel 6 abgedichtet, der an seiner der Preßform zugewandten Seite einen kegelstumpfförmigen Ansatz 10 aufweist, der in das mit dem Schlauch überzogene Ende des Rohres 7 hineingedrückt wird, derart, daß seine Mantelfläche am Rohrende fest anliegt und dieses abdichtet. Am Rohr 7 befestigt ist der Deckel durch nicht gezeigte Haltemittel, beispielsweise durch einen Spannbügel, der an die Außenseite des Rohres 7 montierbar ist oder durch eine den Deckel umgebende auf die Außenseite das Rohres aufschraubbare Kappe.

Beim Einfüllen in die beschriebene Preßform wird nun das Pulvermaterial unter der Wirkung des Einfülldrucks vorverdichtet. Dabei schiebt die Förderkraft der Förderschnecke die gesamte Preßform einschließlich des Formkörpers gegen die auf den Deckel wirkende Gegenkraft in Förderrichtung vom Förderrohr weg, bis auf diese Weise fast der gesamte Innenraum des Schlauchs 5 vorverdichteten Pulvermaterial ausgefüllt ist. Die Bewegung der Preßform relativ zum Förderrohr beim Einfüllen ist durch einen in Förderrichtung weisenden Pfeil unterhalb der Preßform angedeutet.

Nach dem Einfüllen wird die Vakuumpumpe abgeschaltet und der Luftschlauch vom Stutzen 8 abgenommen. Der vorgedehnte Schlauch 5 behält nun aufgrund des vorverdichtet eingefüllten Pulvermaterials seinen gedehnten Zustand. Die Preßform einschließlich des sie umgebenden Formkörpers wird aus der Einfüllvorrichtung, die als Ganzes in Fig. 2 gezeigt ist und noch erläutert wird, entnommen und in die Druckflüssigkeit einer Isostatpresse gebracht, nachdem auch das andere Ende mit einem dem beschriebenen Deckel 6 entsprechenden Deckel verschlossen wurde. Die Druckflüssigkeit der Isostatpresse dringt durch den Stutzen 8 in den Zwischenraum des doppelwandigen Rohres 7 ein, wobei die dort befindliche Luft ebenfalls durch diesen Stutzen oder durch ein weiteres Loch entweicht. Darauf wird die Isostatpresse unter Druck im Bereich von 100 bis 300 bar gesetzt, und dieser Druck wirkt durch die perforierte Innenwand des Rohres 7 auf die Außenseite des vorgedehnten Schlauches 5 und preßt diesen in radialer Richtung zusammen, so daß der gewünschte poröse Körper entsteht. Obwohl die Isostatpresse auf das in ihr befindliche Gebilde von allen Seiten einen gleichmäßigen Druck ausübt, wirkt der Druck im vorliegenden Falle wegen der durch starre Deckel verschlossenen Rohrenden nur in radialer Richtung auf die Preßform, so daß beim Pressen die Längsausdehnung des eingefüllten Materials unverändert bleibt.

Im Gegensatz zu dem isostatischen Pressen, das in der genannten Druckschrift DE-PS-3 240 355 als bevorzugtes Preßverfahren angegeben wird, erleichtert das ausschließlich radiale Pressen die Herstellung langer, zusammenhängender poröser Körper, da die Parameter des Preßvorgangs nicht durch eine Veränderung der Länge verändert werden.

Nach Beendigung des Preßvorgangs wird das Rohr 7 aus der Isostatpresse entnommen, einer oder beide Deckel geöffnet und der vom Schlauch 5 umgebene gepreßte Körper aus dem Rohr entnommen. Darauf wird der Schlauch 5 nochmals gedehnt und der gepreßte poröse Körper daraus entnommen. Vor der Weiterverarbeitung kann es notwendig sein, den porösen Körper an seiner Oberfläche mechanisch zu bearbeiten, bis er die gewünschte geometrische Form aufweist, beispielsweise durch Schleifen der Oberfläche.

Danach wird der poröse Körper einer physikalischen und/oder chemischen Reinigung unterzogen. Als physikalische Reinigung kommt eine Reinigung in einem elektrischen Lichtbogen oder in einem Hochspannungsplasma in Betracht, als chemische Reinigung eine Wärmebehandlung in chlorhaltiger Atmosphäre, damit aus dem porösen Körper Verunreinigungen in Form von Hydroxylgruppen und Übergangsmetallen entfernt werden.

Der poröse Körper, der aufgrund des beschriebenen Verfahrens eine homogene Materialzusammensetzung hat, läßt sich nun zu einem Lichtwellenleiter weiterverarbeiten, beispeilsweise indem er durch Sintern in einen Glaskörper überführt und dieser dann zu einer Glasfaser ausgezogen wird.

Im einfachsten Falle kann diese Faser beim Ziehvorgang mit einem durchsichtigen Kunststoffmantel überzogen werden, dessen Brechungsindex geringer als der des Glasmaterials ist, so daß ein Lichtwellenleiter in Form einer kunststoffummantelten Faser, einer sogenannten PCS-Faser (Plastics Clad Silica) entsteht. Der poröse Körper kann aber auch auf andere, an späterer Stelle erläuterte Weise zu einem anderen Lichtwellenleiter-Typ weiterverarbeitet werden.

Anhand von Fig. 2 wird nun der Gesamtaufbau einer Einfüllvorrichtung, deren für das erfindungsgemäße Verfahren wesentliche Einzelheiten bereits in Fig. 1 dargestellt sind, erläutert, insbesondere die Vorrichtung, die beim Einfüllen die Gegenkraft gegen die Förderkraft der Förderschnecke ausübt. Auf einer Grundplatte 11 sind folgende Teile fest montiert: Der Pulver-Vorratsbehälter 1 mit dem aus ihm herausragenden Förderrohr 4, eine auf der Grundplatte senkrecht aufgesetzte Befestigungsplatte 12, wobei diese und der Pulverbehälter sich an gegenüberliegenden Enden der Grundplatte 11 befinden, ein Tragrahmen 13, der brückenartig auf der Grundplatte befestigt ist, derart, daß sein Querbalken 14 rechtwinklig zur Längsachse der Grundplatte und parallel zur Richtung der Befestigungsplatte verläuft. Zwischen den senkrechten Balken des Tragrahmens und der Befestigungsplatte 12 erstrecken sich zwei parallele Führungselemente, beispielsweise Führungsrohre 15, auf denen eine Gegendruck-Platte 16, die mit Führungshülsen 17 versehen ist, in Längsrichtung der Grundplatte zwischen dem Tragrahmen und der Befestigungsplatte verschiebbar angeordnet ist.

Das Rohr 7, das die Preßform enthält und in welches das Förderrohr 4 hineinragt, ist ebenso wie die Gegendruck-Platte 16 in Längsrichtung verschiebbar angeordnet, entweder dadurch, daß es starr, aber lösbar mit der Gegendruck-Platte 16 verbunden ist, oder daß es in einer Führungsrille verschiebbar gelagert ist und sein durch einen Deckel verschlossenes Ende an der Gegendruck-Platte, ohne mit dieser verbunden zu sein, anliegt. Die Gegendruck-Platte wird durch ein einstellbares Gewicht 18, das über Zugseile 19 und Umlenkrollen 20 am Tragrahmen 13 aufgehängt ist, gegen das Ende des Rohres 7 von außen angedrückt, gegen das von innen das Pulvermaterial durch die Wirkung der Förderschnecke gedrückt wird. Die Zugseile 19 sind an beiden Seiten der Gegendruck-Platte 16 befestigt.

Auf diese Weise wird beim Einfüllen unter der Wirkung der Förderschnecke die Preßform in Förderrichtung vom Förderrohr weggeschoben und dabei das eingefüllte Material vor verdichtet, wobei der Druck unter dem die Vorverdichtung stattfindet, von dem Gewicht 18 bestimmt wird, das die Gegendruck-Platte und damit das Ende des Förderrohres gegen die Kraft der Förderschnecke andrückt. Die Fördergeschwindigkeit, mit der das Pulvermaterial in die Preßform eingefüllt wird, wird durch die Konstruktion der Förderschnecke und deren Drehzahl bestimmt, und der Einfülldruck ist durch das Gewicht 18 einstellbar.

Es ist selbstverständlich, daß eine Vielzahl anderer Vorrichtungen dazu geeignet sind, die Einfüllung des Pulvers in die Preßform bei einem einstellbaren Einfülldruck zu ermöglichen. Beispielsweise ist auch eine kinematisch umgekehrt arbeitende Vorrichtung geeignet, bei der das Rohr 7 fest montiert und der Pulver-Vorratsbehälter mit dem Förderrohr 4 gegen ein einstellbares Gewicht, das der Förderkraft entgegenwirkt, entgegen der Förderrichtung, verschiebbar angeordnet ist.

Der anhand von Fig. 1 beschriebene Einfüllvorgang läßt sich im Prinzip auch auf solche Fälle anwenden, bei denen der zu formende poröse Körper keine homogene Zusammensetzung, sondern eine sich in radialer Richtung verändernde Zusammensetzung hat. Dies ist dadurch möglich, daß zusätzlich zu der gezeigten Förderschnecke 3, die pulverförmiges Material im Bereich der Längsachse der Preßform in diese hineinfördert, eine oder mehrere weitere Förderschnecken vorhanden sind, die koaxial zu der zentralen Förderschnecke 3 angeordnet sind, und die Material mit anderen Zusammensetzungen in koaxiale Bereiche, die sich an den Mittelbereich anschließen, einfüllen.

Diese Förderschnecken befinden sich dann in Zwischenräumen zwischen mehreren koaxial angeordneten Förderrohren. Die Fördergeschwindigkeit und der Einfülldruck kann dabei für jede der Förderschnecken einzeln eingestellt werden, und der maximale im jeweiligen Bereich bewirkte Einfülldruck ist wie bereits beschrieben durch die auf das geschlossene Rohrende wirkende Gegenkraft bestimmt. Durch die unabhängige Steuerung des durch die verschiedenen Förderschnecken jeweils bewirkten Einfülldrucks können gezielte axiale Veränderungen der Durchmesserverhältnisse der einzelnen aneinandergrenzenden Bereiche eingestellt werden. Unter Verwendung einer solchen Anordnung von koaxialen Förderschnecken erlaubt das erfindungsgemäße Verfahren im Hinblick auf die Herstellung von verschiedenen Lichtwellenleiter-Typen die Formung von porösen Körpern, die aus Kernglasmaterial gegebenenfalls mit radial variierender Zusammensetzung und daran anschließendem Mantelglasmaterial in irgend einer gewünschten Abstufung bestehen sollen.

Es können auch andere poröse Körper mit nicht ausschließlich rotationssymmetrischer Struktur wie die bisher beschriebenen hergestellt werden, wenn man nebeneinander liegende, beispielsweise in einem Dreieck oder einem Quadrat angeordnete Förderschnecken mit jeweils diese umgebenden Förderrohren verwendet. Damit ist es möglich, Lichtwellenleiter mit Mehrfachkernen herzustellen, in denen unabhängige Lichtsignale parallel nebeneinander ausbreitungsfähig sind, oder die polarisationserhaltende Eigenschaften haben. Wenn eine solche Anordnung von Kernen auch noch von einem oder mehreren Mänteln umgeben sein soll, so läßt sich dieses durch eine oder mehrere weitere Förderschnecken erreichen, die um diese Anordnung von Kernen herum verlaufen und ein Material oder mehrere Materialien in Bereiche einfüllen, die koaxial zur Längsachse der Anordnung der mehreren Kerne liegen. Wiederum kann für jede Förderschnecke der Einfülldruck und die Fördergeschwindigkeit individuell gesteuert werden.

Im bisherigen Beschreibungsteil hatte die Preßform unabhängig von der Anordnung der Förderschnecken immer die Form eines Hohlzylinders, so daß das anschließende Pressen in jedem Falle einen stabförmigen porösen Körper ergibt. Die Preßform kann aber auch derart ausgebildet sein, daß der geformte poröse Körper ein rohrförmiger Körper ist. Hierzu wird eine Förderschnecke verwendet, die nicht wie die in Fig. 1 gezeigte Förderschnecke das Material im Bereich ihrer Achse fördert, sondern in einem Bereich mit kreisringförmigem Querschnitt, der koaxial zu ihrer Drehachse angeordnet ist. Eine solche Förderschnecke ist in Fig. 3 gezeigt

Diese Förderschnecke 20 dreht sich im Zwischenraum zwischen einem inneren Rohr 21 und einem dazu koaxial angeordneten äußeren Rohr 22 um das innere Rohr herum, so daß sie das pulverförmige Glasausgangsmaterial durch diesen Zwischenraum hindurch in die Preßform in einen von der Achse entfernten koaxialen Bereich hineinfördert.

Als Preßform zur Formung eines rohrförmigen Körpers kann entweder die in Fig. 1 gezeigte Preßform mit einer geringfügigen Abwandlung oder die in Fig. 3 gezeigte Preßform verwendet werden. Die Abwandlung der Preßform nach Fig. 1 besteht darin, daß entlang ihrer Längsachse vom einen zum anderen Ende ein Stab oder ein Rohr beispielweise aus Kieselglas angeordnet ist, der z. B. am Deckel 6 in einer zentralen Vertiefung und nach dem Einfüllvorgang in einer entsprechenden Vertiefung des anderen Deckels befestigbar ist. Die Förderschnecke der in Fig. 3a gezeigten Art fördert nun in entsprechender Weise wie anhand von Fig. 1 beschrieben das pulverförmige Material in den Zwischenraum zwischen diesem Stab oder Rohr und dem vorgedehnten Schlauch 5. Nach dem Preßvorgang läßt sich der Stab- oder rohrförmige Grundkörper mühelos aus der Mitte des gepreßten porösen Körpern entfernen.

Am vorderen Ende weist die Anordnung nach Fig. 3a zwei Dichtringe 23 und 24 auf, die den Bereich, in dem das pulverförmige Material in die Preßform hineingefördert wird, gegen die jeweils anliegenden Teile der Preßform abdichten und ebenso wie der Dichtring 9 bei der Anordnung nach Fig. 1 für eine konstante positionsunabhängige Reibungskraft sorgen. Der innere Dichtring 23 ist auf der Innenseite des inneren Rohres 21 befestigt und liegt an der Außenseite des stab- oder rohrförmigen Grundkörpers an, wogegen der äußere Dichtring 24 an der Außenseite des äußeren Rohres 22 befestigt ist und an der Innenseite des Schlauchs 5 bei der Preßform nach Fig. 1 anliegt.

Eine andere Ausgestaltung einer Preßform zum Formen eines rohrförmigen porösen Körpers unter Verwendung einer Förderschnecke der in Fig. 3a gezeigten Art, ist in Fig. 3b dargestellt. Diese Preßform besteht aus einem flexiblen Schlauch 25 und aus einem starren äußeren Rohr 26. Eingefüllt wird das Pulvermaterial mittels der Vorrichtung nach Fig. 3a in den Zwischenraum zwischen dem Schlauch 25 und dem äußeren Rohr 26. Damit der Schlauch 25 während des Einfüllvorgangs formstabilisiert wird, ist er auf einen starren Grundkörper aufgestülpt, Als solcher Grundkörper wird vorzugsweise ein perforiertes Rohr 27 verwendet, durch dessen Löcher hindurch die Druckflüssigkeit einer Presse ihren Druck auf die Innenseite des Schlauchs 25 ausüben kann, so daß das zwischen den Schlauch und das starre äußere Rohr 26 eingefüllte und dabei vorverdichtete Pulvermaterial gegen die Rohraußenwand in radialer Richtung gepreßt werden kann. Eine Vordehnung des Schlauchs 25 ist bei dieser Anordnung in Gegensatz zu der nach Fig, 1 nicht erforderlich, da hier beim Pressen der Schlauch von innen nach außen gedehnt und nicht wie bei Fig. 1 von außen nach innen gepreßt wird. Beim Einfüllen ist der Zwischenraum zwischen dem am perforierten Rohr 27 anliegenden Schlauch 25 und dem starren äußeren Rohr 26 an dem in Förderrichtung gelegenen Ende der Presform mit einem starren Deckel 28 verschlossen, der einen ringförmigen Wulst 29 aufweist, der in den Zwischenraum hineinragt und diesen an den Rändern abdichtet. Damit nach dem Einfüllen die Druckflüssigkeit in das perforierte Rohr 27 von innen eindringen kann, enthält der Deckel 28 in sei ner Mitte ein Loch, ebenso ein entsprechender auf der anderen Seite der Preßform aufgebrachter Deckel. Wie bei der Anordnung nach Fig. 1 wird beim Einfüllen auf die Rückseite des Deckels 28 eine einstellbare Gegenkraft ausgeübt, die den Einfülldruck begrenzt. Auch bei dieser Preßform geschieht das Pressen aus den gleichen Gründen, die im Zusammenhang mit der Fig. 1 angeführt sind, in radialer Richtung und hat auch hier die gleichen Vorteile.

Es gibt nun mehrere Möglichkeiten, aus dem rohrförmigen porösen Körper einen stabförmigen länglichen Glaskörper zu machen, der als Vorform für einen Lichtwellenleiter geeignet ist. Nach einer physikalischen, chemischen und gegebenenfalls mechanischen Behandlung, die der oben im Zusammenhang mit dem stabförmigen porösen Körper beschriebenen entspricht, kann man den rohrförmigen porösen Körper derart sintern, daß er beim Sintern zu einem stabförmigen Glaskörper kollabiert. Eine zweite Möglichkeit besteht darin, daß man in den rohrförmigen porösen Körper einen in der beschriebenen Art hergestellten stabförmigen porösen Körper steckt und dieses poröse Stab-Rohr-Gebilde zu dem stabförmigen Glaskörper sintert. Falls der rohrförmige Körper aus dem Mantelmaterial eines Lichtwellenleiters und der stabförmige Körper aus dessen Kernmaterial besteht, läßt sich aus der so hergestellten glasigen Vorform ein Lichtwellenleiter mit einer Kern-Mantel-Struktur herstellen.

Eine weitere Möglichkeit, aus einem stabförmigen porösen Körper und einem rohrförmigen porösen Körper einen länglichen Glaskörper zu bilden, besteht darin, daß man den rohrförmigen porösen Körper zu einem Glasrohr und den stabförmigen porösen Körper zu einem Glasstab sintert, den Glasstab in das Glasrohr steckt und dieses Gebilde zu einem länglichen Glaskörper verschmilzt.

Erwähnt sei noch, daß in jeder Phase des beschriebenen Verfahrens vom Stadium der Herstellung des pulverförmigen Ausgangsmaterials bis zum Sintern zu einem als Vorform geeigneten länglichen Glaskörper darauf geachtet verden muß, daß Verunreinigungen des Materials vermieden werden.

Hierfür ist es günstig, daß die Vorratsbehälter für das Pulvermaterial stets luftdicht abgeschlossen sind und daß das Einfüllen in die Preßform in abgeschlossener Atmosphäre, beispielsweise in einem evakuierten Handschuhkasten, geschieht. In diesen Handschuhkasten ragt von außen das oder die Förderrohre durch eine vakuumdichte Durchführung hinein. Erst nachdem die Preßform auf beiden Seiten mit einem Deckel verschlossen ist, wird sie aus diesem Handschuhkasten entnommen und in die Isostatpresse gebracht.

Eine weitere Maßnahme zur Vermeidung von Verunreinigungen besteht darin, daß man die Wärmebehandlung des porösen Körpers in Chlorgasatmosphäre und das anschließende Sintern zu einem Giaskörper in einer Apparatur durchführt, die zwischen der Wärmebehandlung in Chlorgasatmosphäre und dem Sintervorgang den porösen Körper in abgeschlossener Atmosphäre hält, beispielsweise indem der poröse Körper von unten nach oben durch eine erste Zone, in der die Wärmebehandlung stattfindet, und von dieser sofort in eine zweite Zone, in der das Sintern stattfindet, geschoben wird.

Zum Herstellen von stabförmigem porösen Körpern, deren Zusammensetzung sich in radialer Richtung ändert, wurden vorstehend Verfahren angegeben, bei denen aus mehreren koaxial angeordneten Förderrohren pulverförmiges Glasmaterial mit in radialer Richtung sich ändernder Zusammensetzung mit Vorverdichtung in die Preßform eingefüllt wird. Der die Vorverdichtung bewirkende Einfülldruck wird dabei entweder durch Förderschnecken oder durch eine Zentrifugalkraft erzeugt.

In jedem Falle bedeuten die koaxiale Anordnung verschiedener Förderrohre und die gleichzeitige Förderung verschiedener Materialien einen beträchtlichen apparativen Aufwand.

Im folgenden wird ein apparativ einfacheres Verfahren angegeben: wie oben im Zusammenhang mit der Herstellung eines rohrförmigen Körpers beschrieben, ist in der Preßform nach Fig. 1 entlang der Längsachse in der Mitte vom einen Ende zum anderen Ende verlaufend ein stabförmiger Grundkörper, d. h. ein Stab oder ein Rohr, beispielsweise aus Kieselglas angeordnet, und es wird pulverförmiges Glasausgangsmaterial in den Zwischenraum zwischen diesem Grundkörper und der inneren Wand der Preßform mittels einer Förderschnecke so eingefüllt, daß es dabei vorverdichtet wird. Das eingefüllte Material hat beispielweise die für den Mantel eines Lichtwellenleiters geeignete Zusammensetzung. Durch die Vorverdichtung erhält das eingefüllte Material eine solche Konsistenz, daß sich der Grundkörper nach Beendigung des Einstellvorgangs herausziehen läßt, ohne daß es in den entstehenden Hohlraum hineinfällt. Nachdem der Grundkörper herausgezogen ist, wird weiteres pulverförmiges Glasausgangsmaterial mit einer anderen Zusammensetzung, z. B. Kernmaterial, ebenfalls unter Vorverdichtung in den Hohlraum eingefüllt. Falls dieses Material eine über den Querschnitt konstante Zusammensetzung haben soll, so wird es nach der in Fig. 1 gezeigten Art mittels einer zentral angeordneten Förderschnecke eingefüllt. Falls die Materialzusammensetzung über den Querschnitt variieren soll, wie es für einen Lichtwellenleiter mit einem Gradientenindexprofil erforderlich ist, so wird nach Entfernen des Grundkörpers ein andere Grundkörper mit kleinerem Durchmesser in der Mitte des Hohlraums entlang der Längsachse angeordnet und in den Zwischenraum pulverförmiges Glausausgangsmaterial mit anderer Zusammensetzung mittels einer an den Zwischenraum angepaßten Förderschnecke der in Fig. 3a gezeigten Art unter Vorverdichtung eingefüllt, danach der Grundkörper wieder entfernt und der nächste Grundkörper eingeführt usw., bis schließlich der restliche Hohlraum mittels einer zentral angeordneten Förderschnecke mit dem für den Zentralbereich geeigneten Material gefüllt wird. Der erste Einfüllvorgang wird also mehrmals mit geänderter Materialzusammensetzung, jeweils anderem Grundkörper und einer daran angepaßten Förderschnecke wiederholt, bis der restliche Hohlraum gefüllt wird.

Das vorstehend beschriebene Verfahren, bei dem die aneinander angrenzenden koaxialen Bereiche der Presform nacheinander gefüllt werden, hat den Vorteil, daß jeder der verschiedenen Einfüllschritte hinsichtlich des Einfülldrucks und der Einfüllgeschwindigkeit individuell und unabhängig von den anderen gesteuert werden kann.

Nachstehend wird noch eine alternative Verfahrensvariante beschrieben, bei der ebenfalls von dem erfindungsgemäßen Prinzip Gebrauch gemacht wird, daß das pulverförmige Glasausgangsmaterial beim Einfüllen in die Preßform vorverdichtet wird, bei dem aber zum Einfüllen in die Preßform keine Förderschnecken verwendet werden. Diese Variante besteht darin, daß die Preßform, die gleich oder ähnlich wie die beschriebenen Preßformen gestaltet sind, beim Einfüllen in eine Rotationsbewegung versetzt wird, derart, daß in Richtung ihrer Längsachse die Zentrifugalkraft wirkt und das Pulvermaterial unter deren Wirkung eingefüllt und vorverdichtet wird, wobei der Einfülldruck von der Zentrifugalkraft bestimmt wird. Auch bei diesem Verfahren können mehrere koaxiale Rohre verwendet werden, um einen porösen Körper mit radial abgestufter Zusammensetzung oder einen rohrförmigen porösen Körper zu erzeugen.

**Patentansprüche**

1. Verfahren zur Herstellung eines länglichen Glaskörpers, insbesondere einer Vorform für Lichtwellenleiter auf der Basis von $SiO_2$, bei dem aus pulverförmigem Glasausgangsmaterial durch Einfüllen in eine Preßform (5; 25, 26) und Pressen ein poröser Körper geformt und dieser zum Glaskörper gesintert wird, <u>dadurch</u>

<u>gekennzeichnet</u>, daß das pulverförmige Glasausgangsmaterial derart in die Preßform (5; 25, 26) eingefüllt wird, daß es beim Einfüllen vorverdichtet wird.

2. Verfahren nach Anspruch 1, dadurch gekennzeichnet, daß als Preßform ein flexibler Schlauch (5) verwendet wird und daß dieser während des Einfüllvorgangs durch einen ihn umgebenden Formkörper (7) formstabilisiert wird.

3. Verfahren nach Anspruch 2, dadurch gekennzeichnet, daß als Formkörper ein doppelwandiges Rohr (7) verwendet wird, dessen innere Wand perforiert ist und bei dem der Druck im Raum zwischen den beiden Wänden des Rohres erniedrigt oder erhöht werden kann.

4. Verfahren nach Anspruch 3, dadurch gekennzeichnet, daß der flexible Schlauch (5) während des Einfüllens durch Herabsetzen des Drucks im Raum zwischen den Wänden des Rohres (7) vorgedehnt und nach Beendigung des Einfüllvorgangs durch Erhöhen des Drucks in diesem Raum in radialer Richtung gepreßt wird, derart, daß das eingefüllte Material zum porösen Körper geformt wird.

5. Verfahren nach einem der Ansprüche 1 bis 4, dadurch gekennzeichnet, daß das Material mittels einer Förderschnecke (3, 20) unter einem ständigen, regelbaren Druck und mit regelbarer Fördergeschwindigkeit in die Preßform (5; 25, 26) eingefüllt wird.

6. Verfahren nach einem der Ansprüche 1 bis 4, dadurch gekennzeichnet, daß mittels einer Anordnung von koaxialen Förderschnecken ein Material mit einer ersten Zusammensetzung in einen achsnahen Bereich und mindestens ein Material mit einer anderen Zusammensetzung in mindestens einen zum achsnahen Bereich koaxialen Bereich unter einem ständigen, jeweils regelbaren Druck und mit jeweils regelbarer Fördergeschwindigkeit in die Preßform (5; 25, 26) eingefüllt werden.

7. Verfahren nach einem der Ansprüche 1 bis 4, dadurch gekennzeichnet, daß mittles mehrerer parallel nebeneinander angeordneter Förderschnecken Materialien mit gleicher oder unterschiedlicher Zusammensetzung in einen inneren Bereich und mittels einer oder mehreren diesen umgebenden zueinander koaxialen Förderschnecken Materialien mit anderen Zusammensetzungen in daran anschliessende Bereiche eingefüllt werden, wobei das Einfüllen jeweils unter einem ständigen, regelbaren Druck und mit jeweils regelbarer Fördergeschwindigkeit erfolgt.

8. Verfahren nach einem der Ansprüche 1 bis 7, dadurch gekennzeichnet, daß die Preßform (5) so ausgebildet ist, daß der geformte Körper ein stabförmiger Körper ist.

9. Verfahren nach einem der Ansprüche 1 bis 7, dadurch gekennzeichnet, daß die Preßform (25, 26) so ausbebildet ist, daß der geformte poröse Körper ein rohrförmiger Körper ist.

10. Verfahren nach Anspruch 9, dadurch gekennzeichnet, daß in der Mitte der Preßform (5) ein stabförmiger Grundkörper in Längsrichtung vom einen zum anderen Ende verlaufend angeordnet ist, daß das pulverförmige Glasausgangsmaterial in den Zwischenraum zwischen diesem Grundkörper und der Wand der Preßform mit Vorverdichtung eingefüllt und anschließend gepreßt wird und daß nach dem Preßvorgang der stabförmige Grundkörper aus dem porösen Körper entfernt wird.

11. Verfahren nach Anspruch 9 ohne dessen Rückbeziehung auf die Ansprüche 2, 3, 4 und 7, dadurch gekennzeichnet, daß die Preßform (25, 26) eine koaxiale Anordnung eines starren Rohres (26) und eines in diesem befindlichen flexiblen Schlauches (25) ist, daß das pulverförmige Glasausgangsmaterial in den Zwischenraum zwischen dem Schlauch (25) und dem starren Rohr (26) mit Vorverdichtung eingefüllt wird und daß der Schlauch (25) beim Einfüllen durch einen an seiner Innenwand anliegenden starren zylindrischen Körper (27) formstabilisiert wird.

12. Verfahren nach Anspruch 11, dadurch gekennzeichnet, daß als starrer zylindrischer Körper ein perforiertes Rohr (27) verwendet wird und daß nach Beendigung des Einfüllvorgangs durch Erhöhen des Drucks im perforierten Rohr der Schlauch (25) gedehnt und damit das eingefüllte Material in radialer Richtung von innen nach außen zu einem rohrförmigen porösen Körper gepreßt wird.

13. Verfahren nach einem der Ansprüche 1 bis 4, dadurch gekennzeichnet, daß zeitlich nacheinander unterscheidlich zusammengesetzte pulverförmige Glasausgangsmaterialien in aneinander angrenzende koaxiale Bereiche jeweils mittels einer Förderschnecke (20, 3) unter einem ständigen, regelbaren Druck und mit regelbarer Fördergeschwindigkeit in die Preßform (5; 25, 26) eingefüllt werden.

14. Verfahren nach Anspruch 13, dadurch gekennzeichnet, daß in der Mitte der Preßform (5) ein stabförmiger Grundkörper in Längsrichtung vom einen zum anderen Ende verlaufend angeordnet ist, daß pulverförmiges Glasausgangsmaterial mit einer ersten Zusammensetzung in den Zwischenraum zwischen diesem Grundkörper und der Innenwand der Preßform mit Vorverdichtung mittels einer Förderschnecke (20) eingefüllt wird, daß nach diesem Einfüllvorgang der Grundkörper herausgezogen und in den entstandenen Hohlraum pulverförmiges Glasausgangsmaterial mit einer anderen Zusammensetzung ebenfalls mit Vorverdichtung mittels einer oder mehrerer Förderschnecken (3) eingefüllt wird.

15. Verfahren nach Anspruch 14, dadurch gekennzeichnet, daß zum Befüllen des Hohlraumes der vorhergehende Einfüll-Vorgang zunächst ein- oder mehrere Male mit jeweils einem anderen Grundkörper und einer daran angepaßten Förderschnecke (20) und einer anderen Zusammensetzung des pulverförmigen Glasausgangsmaterials wiederholt und dann der restliche Hohlraum mittels einer weiteren Förderschnecke (3) ebenfalls mit Vorverdichtung gefüllt wird, derart, daß eine in radialer Richtung stufenweise variierende Zusammensetzung des in die Preßform (5) eingefüllten pulverförmigen Glasausgangsmaterials entsteht.

16. Verfahren nach einem der Ansprüche 1 bis 15, dadurch gekennzeichnet, daß der Druck zum Vorverdichten des in die Preßform (5; 25, 26) eingefüllten Glasausgangsmaterials durch die Kraft der Förderschnecke (3, 20) erzeugt und durch eine einstellbare, auf das in Förderrichtung gelegene Ende der Preßform (5; 25, 26) wirkende Gegenkraft begrenzt wird.

17. Vorrichtung zum Einfüllen von pulverförmigem Glasausgangsmaterial in eine Preßform, mit einem Vorratsbehälter (1) und einer Preßform (5, 25, 26), dadurch gekennzeichnet,
- daß zur Durchführung des Verfahrens nach Anspruch 16 die Preßform ein Schlauch (5) ist, der von einem doppelwandigen Rohr (7) mit perforierter inneren Wand umgeben ist oder eine koaxiale Anordnung eines starren Rohres (26) und eines darin befindlichen flexiblen Schlauches (25) ist, dessen Innenwand an einem perforierten Rohr (27) anliegt,
- daß sie eine oder mehrere Förderschnecken (3, 20) zum Einfüllen des Pulverförmigen Glasausgangsmaterials in die Preßform hat,
- daß jede einzeln oder innerhalb einer Anordnung von Förderschnecken wirkende Förderschnecke (3, 20) in einem Förderrohr (4) oder einer Anordnung von Förderrohren (21, 22) angeordnet ist,
daß sie einen die Preßform beim Einfüllen an ihrem Ende verschließenden Deckel (5, 28) aufweist,
- daß das Förderrohr (4) oder die Anordnung von Förderrohren (21, 22) vom anderen Ende her in Längsrichtung der Preßform (5; 25, 26) in diese hineinragt,
- daß die Preßform in Förderrichtung relativ zum Förderrohr (4, 21, 22) verschiebbar angeordnet ist und
- daß Mittel (16, 17, 18, 19, 20) vorhanden sind, die auf das verschlossene Ende der Preßform entgegen der Förderrichtung eine einstellbare Gegenkraft ausüben.

18. Verfahren nach einem der Ansprüche 1 bis 15, dadurch gekennzeichnet, daß die durch den Formkörper (7, 27) formstabilisierte Preßform (5; 25, 26) nach dem Befüllen an beiden Enden mit je einem starren Deckel (6, 28) verschlossen und in einer Isostatpresse einem allseitig wirkenden Druck ausgesetzt wird, derart, daß die Druckflüssigkeit nur in radialer Richtung durch die perforierte Wand des Formkörpers (7, 27) hindurch einen Druck auf die Preßform (5; 25, 26) ausübt.

19. Verfahren nach Anspruch 18, dadurch gekennzeichnet, daß ein stabförmiger poröser Körper und ein rohrförmiger poröser Körper getrennt hergestellt werden, der stabförmige poröse Körper in den rohrförmigen porösen Körper gesteckt und das Stab-Rohr-Gebilde zu dem Glaskörper gesintert wird.

20. Verfahren nach Anspruch 18, dadurch gekennzeichnet, daß ein stabförmiger poröser Körper und ein rohrförmiger poröser Körper getrennt hergestellt und zu einem stabförmigen glasigen und zu einem rohrförmigen glasigen Körper gesintert werden und daß der stabförmige Glaskörper in den rohrförmigen Glaskörper gesteckt und beide zu dem Glaskörper zusammengeschmolzen werden.

21. Verfahren nach einem der vorstehenden Ansprüche, dadurch gekennzeichnet, daß synthetisch hergestelltes pulverförmiges Glasausgangsmaterial verwendet wird, daß das pulverförmige Glasausgangsmatrial vor dem Einfüllen in die Preßform (5; 25, 26) durch Vakuumtempern getrocknet und/oder durch eine Wärmebehandlung in chlorhaltiger Atmosphäre gereinigt wird.

22. Verfahren nach einem der vorstehenden Ansprüche, dadurch gekennzeichne, daß das pulverförmige Glasausgangsmaterial vor dem Einfüllen in die Preßform (5; 25, 26) agglomeriert wird, um die Schüttdichte zu erhöhen.

**Claims**

1. Method for manufacturing an elongated glass body, especially a preforming mould for optical waveguides based on $SiO_2$ in which a porous body is moulded from a powdered starting glass material by being filled into an extrusion die (5; 25, 26) and compressed and the said porous body is sintered to the glass body, <u>characterized in</u> that the powdered starting glass material is filled into the extrusion die (5; 25, 26) in such a way that it is precompacted as it is filled in.

2. A method as claimed in Claim 1, characterized in that a flexible hose (5) is used as the extrusion die and that the shape of this is stabilized during the filling process by a moulding body (7) surrounding it.

3. A method as claimed in Claim 2, characterized in that use is made, as the moulding body, of a double-walled tube (7) whose internal wall is perforated and in which the pressure in the space between the two walls of the tube can be reduced or increased.

4. A method as claimed in Claim 3, characterized in that the flexible hose (5) is prestretched during the filling by reduction of the pressure in the space between the walls of the tube (7) and, after completion of the filling process, is pressed in a radial direction through increasing of the pressure in this space in such a way that the material filled in is moulded into the porous body.

5. A method as claimed in any one of Claims 1 to 4, characterized in that the material is filled into the extrusion die (5; 25, 26) by means of a feed screw (3, 20) at a constant, regulable pressure and at a regulable rate of feed.

6. A method as claimed in any one of Claims 1 to 4, characterized in that, by means of an arrangement of coaxial feed screws, a material of a first composition is fed into the extrusion die (5; 25, 26) into an area close to the axis and at least one material of a different composition is filled into at least one area coaxial with the area close to the axis at a feed rate which is regulable in each case.

7. A method as claimed in any one of Claims 1 to 4, characterized in that, by means of several feed screws arranged parallel with each other, materials of the same or different composition are fed into an inner area and, by means of one or more feed screws coaxial with each other and surrounding this area, materials of other compositions are filled into areas adjacent thereto, the filling taking place in each case at a constant, regulable pressure and at a constant, regulable rate of feed.

8. A method as claimed in any one of Claims 1 to 7, characterized in that the extrusion die (5) is of such a shape that the porous body moulded is a rod- shaped body.

9. A method as claimed in any one of Claims 1 to 7, characterized in that the extrusion die (25, 26) is of such a shape that the porous body moulded is a tubular body.

10. A method as claimed in Claim 9, characterized in that a rod-shaped basic body is arranged in the middle of the extrusion die (5), running longitudinally from one end to the other, that the powdered glass starting material is filled into the intervening space between this basic body and the wall of the extrusion die with precompression and then pressed and that after the pressing process the rod-shaped basic body is removed from the porous body.

11. A method as claimed in Claim 9 without its reference back to Claims 2, 3, 4 and 7, characterized in that the extrusion die (25, 26) is a coaxial arrangement of a rigid tube (26) and a flexible hose (25) situated within it, that the powdered glass starting material is filled into the intervening space between the hose (25) and the rigid tube (26) with precompression and that the hose (25), when being filled, is stabilized in shape by a rigid cylindrical body (27) lying against its inner wall.

12. A method as claimed in Claim 11, characterized in that a perforated tube (27) is used as the rigid cylindrical body and that, after completion of the filling process, the hose (25) is stretched by raising of the pressure in the perforated tube and that thereby the filled-in material is pressed radially from the inside outwards to form a tubular porous body.

13. A method as claimed in any one of Claims 1 to 4, characterized in that, in chronological succession, differently-composed powdered glass starting materials are filled into the extrusion die (5; 25, 26) into coaxial areas adjacent to each other by means in each case of a feed screw (20, 3) at a constant, regulable pressure and at a regulable rate of feed.

14. A method as claimed in Claim 13, characterized in that there is arranged in the middle of the extrusion die (5) a rod-shaped basic body running longitudinally from one end to the other, that powdered glass starting material with a first composition is filled into the intermediate space between this basic body and the inner wall of the extrusion die with precompression by means of a feed screw (20), that, after this filling process, the basic body is extracted and powdered glass starting material with a different composition, again with precompression, is filled into the hollow space formed by means of one or more feed screws (3).

15. A method as claimed in Claim 14, characterized in that, in order to fill the hollow space, the preceding filling process is first repeated one or more times with a different basic body in each case and a feed screw (20) suited thereto and a different composition of the powdered glass starting material and that the remaining space is filled by means of a further feed screw (3), again with precompression, in such a way as to bring about a composition of the powdered glass starting material which is filled into the extrusion die (5) which varies by stages in the radial direction.

16. A method as claimed in any one of Claims 1 to 15, characterized in that the pressure for precompression of the glass starting material filled into the extrusion die (5; 25, 26) is produced by the force of the feed screw (3, 20) and is limited by an adjustable counterforce acting on the end of the extrusion die (5; 25, 26) situated in the direction of feed.

17. Device for filling-in of powdered glass starting material into an extrusion die with a storage tank (1) and an extrusion die (5; 25, 26) characterized in

- that, for the carrying out of the procedure as claimed in Claim 16, the extrusion die is a hose (5) which is surrounded by a double-walled tube (7) with a perforated inner wall or is a coaxial arrangement of a rigid tube (26) and a flexible hose (25) contained therein, the inner wall of which lies against a perforated tube (27),

- that it has one or more feed screws (3, 20) for filling the powdered glass starting material into the extrusion die,

- that each feed screw (3, 20) operating individually or within an arrangement of feed screws is arranged in a feed tube (4) or an arrangement of feed tubes (21, 22),

- that it has a lid (5, 28) which closes the extrusion die at its end during filling,

- that the feed tube (4) or the arrangement of feed tubes (21, 22) projects into the extrusion die (5; 25, 26) from the other end in the longitudinal direction thereof,

- that the extrusion die is arranged in such a way that it can be moved in the direction of feed in relation to the feed tube (4, 21, 22) and

- that means (16, 17, 18, 19, 20) are present which exert an adjustable counterforce on the closed end of the extrusion die against the direction of feed.

18. A method as claimed in any one of Claims 1 to 15, characterized in that the extrusion die (5; 25, 26) stabilized in form by the mould body (7, 27) is closed with a rigid lid (6, 28) at each of its ends after filling and is exposed in an isostatic press to a pressure operating on all sides in such a way that the pressure fluid exerts a pressure on the extrusion die (5; 25, 26) only in a radial direction through the perforated wall of the mould body (7, 27).

19. A method as claimed in Claim 18, characterized in hat a rod-shaped porous body and a tubular porous body are produced separately, the rod-shaped porous body is inserted into the tubular porous body and the rod-tube structure is sintered to the glass body.

20. A method as claimed in Claim 18, characterized in that a rod-shaped porous body and a tubular porous body are produced separately and are sintered to form a rod-shaped glass body and to form a tubular glass body and that the rod-shaped glass body is inserted in the tubular glass body and both are fused together to the glass body.

21. A method as claimed in any one of the preceding claims, characterized in that synthetically produced powdered glass starting material is used, that the powdered glass starting material is dried by vacuum tempering before being filled into the extrusion die (5; 25, 26) and/or cleaned by a heat treatment in an atmosphere containing chlorine.

22. A method as claimed in any one of the preceding claims, characterized in that the powdered glass starting material is agglomerated before being filled into the extrusion die (5; 25, 26) in order to increase the bulk density.

**Revendications**

1. Procédé de fabrication d'un corps long en verre, en particulier une préforme à base de $SiO_2$ pour guides d'ondes optiques, dans lequel, à partir d'un matériau de base en verre réduit en poudre, par remplissage d'un moule de compression (5; 25, 26) et pressage, on forme un corps poreux, lequel est fritté en un corps en verre, caractérisé en ce que le matériau de base en verre réduit en poudre est apporté dans un moule de compression (5; 25, 26) de manière qu'il soit précompacté au cours de remplissage.

2. Procédé conforme à la revendication 1, caractérisé en ce qu'un tuyau flexible (5) est utilisé comme moule de compression et en ce que ce tuyau flexible, au cours de processus de remplissage, est maintenu dans sa forme par un corps de maintien de form (7) qui l'entoure.

3. Procédé conforme à la revendication 2, caractérisé en ce qu'un tube à double paroi (7) est utilisé comme corps de maintien de forme, dont la paroi intérieure est perforée, la pression entre les deux parois du tube pouvant est diminuée ou augmentée.

4. Procédé conforme à la revendication 3, caractérisé en ce que ledit tuyau flexible (5), durant le remplissage, est préalablement étendu, par réduction de la pression entre les parois dudit tube (7) et, après la fin du processus de remplissage, par accroissement de la pression dans cet espace, il est pressé en direction radiale, c'est- à-dire d'une façon telle que le matériau qui y a été versé est transformé en un corps poreux.

5. Procédé conforme à l'une des revendications 1 à 4, caractérisé en ce que le matériau est apporté dans le moule de compression (5; 25, 26) par un convoyeur à vis (3, 20) sous une pression continue ajustable et à une vitesse de convoyage réglable.

6. Procédé conforme à l'une des revendications 1 à 4, caractérisé en ce que, à l'aide d'un agencement de convoyeurs concentriques, un matériau d'une première composition est apporté dans une zone proche de l'axe et au moins un matériau d'une composition différent est apporté dans au moins une zone qui est coaxiale par rapport à la zone proche de l'axe, dans le moule de compression (5; 25, 26), sous une pression respective ajustable de façon continue et à une vitesse de convoyage respective réglable.

7. Procédé conforme à l'une des revendications 1 à 4, caractérisé en ce que, à l'aide de plusieurs convoyeurs disposés parallèlement les uns aux autres, des matériaux de le même ou de différentes compositions sont apportés dans une zone intérieure et en ce que, à l'aide d'une ou plusieurs convoyeurs à vis entourant cette dernière et que sont concentriques les uns par rapport aux autres, des matériaux d'autres composition sont apportés dans des zones se suivant successivement, les opérations de remplissage étant chacune effectuée sous une pression ajustable en continu et à une vitesse de convoyage réglable.

8. Procédé conforme à l'une des revendications 1 à 7, caractérisé en ce que le moule de compression (5) est conformé de manière que le corps formé soit en forme de barreau.

9. Procédé conforme à l'une des revendications 1 à 7, caractérisé en ce que le moule de compression (25, 26) est conformé de manière que le corps formé soit en forme de tube.

10. Procédé conforme à la revendication 9, caractérisé en ce que au centre du moule de compression (5), il est disposé dans le sens longitudinal, un corps de base en forme de barreau s'étendant d'une extrémité à l'autre, en ce que le matériau de base en verre réduit en poudre est apporté dans l'espace entre ce corps de base et la paroi du moule de compression tout en étant précompacté, après quoi il est comprimé, et en ce que après l'étape de compression, le corps de base en forme de barreau est retiré du corps poreux.

11. Procédé conforme à la revendication 9, sans qu'il y soit référé aux revendications 2, 3, 4 et 7, caractérisé en ce que le moule de compression (25, 26) est un agencement coaxial d'un tube rigide (26) et d'un tuyau flexible (25) disposé dans celui-ci, en ce que le matériau de base en verre réduit en poudre est apporté sous une forme précompactée dans l'espace entre tuyau (25) et le tube rigide (26), et en ce le tuyau (25), au cours du remplissage, a sa forme stabilisée au moyen d'un corps cylindrique rigide (27) appliqué sur sa paroi intérieure.

12. Procédé conforme à la revendication 11, caractérisé en ce qu'un tube perforé (27) est utilisé comme corps cylindrique rigide et en ce que, après la fin du processus de remplissage, le tuyau (25) est étendu, ce qui entraîne la compression du matériau apporté, dans le sens radial, de l'intérieur vers l'extérieur, en un corps poreux tubulaire.

13. Procédé conforme à l'une des revendications 1 à 4, caractérisé en ce que des matériaux de base en verre réduit en poudre de différentes compositions sont apportés l'un après l'autre dans des zones coaxiales voisines dans le moule de compression (5; 25, 26), chacun à l'aide d'un convoyeur à vis (20, 3), sous une pression continue ajustable et à une vitesse de convoyage réglable.

14. Procédé conforme à la revendication 13, caractérisé en ce qu'un corps de base en forme de barreau est disposé au centre du moule de compression (5), dans le sens longitudinal, d'une extrémité à l'autre, en ce qu'un matériau de base en verre réduit en poudre d'une première composition est amené dans l'espace entre ce corps de base et la parois interne du moule de compression en y étant précompacté, à l'aide d'un premier convoyeur à vis (20), en ce que, après ce remplissage, le corps de base est enlevé et un matériau de base en verre réduit en poudre d'une composition différente est apporté dans l'espace vide résultant, en y étant de même précompacté, à l'aide d'un ou plusieurs convoyeurs à vis (3).

15. Procédé conforme à la revendication 14, caractérisé en ce que, afin de remplir l'espace vide, le précédent processus de remplissage est d'abord répété une ou plusieurs fois, avec, à chaque fois, un corps de base différent et un convoyeur à vis (20) approprié, ainsi qu'une composition différente du matériau de base en verre réduit en poudre et en ce qu'ensuite, l'espace vide restant, à l'aide d'un autre convoyeur à vis (3) est de même rempli et précompacté, de sorte qu'il en résulte une composition du matériau de base en verre réduit en poudre apporté dans le moule de compression variant par sauts dans le sens radial.

16. Procédé conforme à l'une des revendications 1 à 15, caractérisé en ce que la pression pour le précompactage du matériau de base en verre réduit en poudre apporté dans le moule de compression (5; 25, 26), est déterminée par la force du convoyeur à vis (3, 20) et est limitée par une force antagoniste ajustable agissant sur l'extrémité du moule de compression (5; 25, 26) qui est trouve dans le sens du convoyage.

17. Appareillage pour remplir un moule de compression d'un matériau de base en verre réduit en poudre comprenant un réservoir (1) et un moule de compression (5; 25, 26), caractérisé en ce que:
- pour la mise en oeuvre du procédé conforme à la revendication 16, le moule de compression est un tube flexible (5) qui est entouré par un tube à double paroi (7) dont la paroi intérieure est perforée, ou il s'agit d'un agencement coaxial d'un tube rigide (26) dans lequel se trouve un tube flexible (25) dont la paroi intérieure s'appuis contre un tube perforé (27),
- il comprend un ou plusieurs convoyeurs à vis (3, 20) pour le remplissage du moule de compression par un matériau de base en verre réduit en poudre,
- chaque convoyeur à vis (3, 20) unique ou au sein d'un agencement de convoyeurs à vis est disposé dans un tube de convoyage (4) ou d'un agencement de tubes de convoyage (21, 22),
- il comporte un couvercle (6, 28) obturant l'extrémité du moule de compression pendant son remplissage;
- le tube de convoyage (4) ou l'agencement de tubes de convoyage (21, 22) pénèntre à l'intérieur du moule de compression (5; 25, 26), par son autre extrémité et dans le sens longitudinal,
- le moule de compression est disposé de façon à pouvoir être déplacé dans le sens du convoyage, par rapport au tube de convoyage (4, 21, 22),
- des moyens (16, 17, 18, 19, 20) sont prévus pour appliquer une force antagoniste réglable sur l'extrémité fermée du moule de compression, dans le sens opposé à la direction de convoyage.

18. Procédé conforme à l'une des revendications 1 à 15, caractérisé en ce que le moule de compression (5; 25, 26) dont la forme est stabilisée par le corps de maintien de forme (7, 27), après avoir été rempli, est refermé à ses deux extrémités par un couvercle rigide (6, 28) pour chacune d'elles et, dans une presse isostatique, est soumis à une pression agissant de tous côtés, c'est-à-dire de façon telle que le liquide de compression exerce une force seulement dans la direction radiale, à travers les parois perforées du corps de maintien de forme (7, 27), sur le moule de compression (5; 25, 26).

19. Procédé conforme à la revendication 18, caractérisé en ce que le corps poreux en forme de barreau et un corps poreux de forme tubulaire sont fabriqués séparément, en ce que le corps poreux en forme de barreau est inséré dans le corps poreux de forme tubulaire, et en ce que la structure tube-barreau résultante est frittée pour l'obtention d'une corps en verre.

20. Procédé conforme à la revendication 18, caractérisé en ce que le corps poreux en forme de barreau et un corps poreux de forme tubulaire sont fabriqués séparément et frittés en un corps vitreux en forme de barreau et un corps vitreux de forme tubulaire, en ce que le corps vitreux en forme de barreau est inséré dans le corps vitreux de forme tubulaire, l'ensemble étant fondu pour fournir le corps de verre.

21. Procédé selon l'une quelconque des revendications précédentes, caractérisé en ce que l'on utilise un matériau de base en verre réduit en poudre produit synthétiquement, en ce que le matériau de base en verre réduit en poudre est séché par trempage sous vide et/ou purifié par un traitement thermique dans une athmosphère contenant du chlore, avant d'être versé dans le moule de compression.

22. Procédé conforme à l'une quelconque des revendications précédentes, caractérisé en ce que le matériau de base en verre réduit en poudre, avant d'être introduit dans le moule de compression, est aggloméré afin d'augmenter sa densité.

Fig.1

0 153 619

Fig. 2

Fig. 3a

Fig. 3b

3